(19) Europäisches Patentamt

European Patent Office

Office européen des brevets

(11) Veröffentlichungsnummer: **0 277 323 B1**

(12) **EUROPÄISCHE PATENTSCHRIFT**

(45) Veröffentlichungstag der Patentschrift: **29.05.91**

(21) Anmeldenummer: **87118469.3**

(22) Anmeldetag: **14.12.87**

(51) Int. Cl.⁵: **F16K 3/18**

(54) **Schiebeventil.**

(30) Priorität: **18.12.86 CH 5100/86**

(43) Veröffentlichungstag der Anmeldung:
**10.08.88 Patentblatt 88/32**

(45) Bekanntmachung des Hinweises auf die
Patenterteilung:
**29.05.91 Patentblatt 91/22**

(84) Benannte Vertragsstaaten:
**AT BE DE FR GB IT NL SE**

(56) Entgegenhaltungen:
**DE-A- 1 525 556**
**DE-C- 61 834**
**DE-C- 503 772**
**DE-C- 532 915**

(73) Patentinhaber: **Cetec AG**
**Hueb Postfach 41**
**CH-9468 Sax(CH)**

(72) Erfinder: **Tinner, Friedrich**
**Hueb**
**CH-9468 Sax(CH)**

(74) Vertreter: **Scheidegger, Werner & Co.**
**Siewerdtstrasse 95**
**CH-8050 Zürich(CH)**

## Beschreibung

Die vorliegende Erfindung betrifft ein Schiebeventil mit einem in einen Durchflusskanal einsetzbaren Gehäuse mit Führungen zum seitlichen Einschieben von zwei im Abstand voneinander parallel verlaufenden Verschliessplatten, welche bei geöffnetem Ventil gegeneinander gezogen werden, einem zwischen den Platten angeordneten Verschliessmechanismus, um jede der Platten nach Erreichen der Schliessstellung gegen einen vorderen bzw. hinteren Ventilsitz im Gehäuse anzudrücken, welcher Mechanismus ein in den genannten Führungen verfahrbares Gestell umfasst, das auch bei sich in Schliessstellung befindlichen Platten relativ zu letzteren verschiebbar ist und in den anderen Betriebsstellungen über einen Schleppmechanismus mit den Platten bewegungsverbunden ist, wobei das Gestell mit wenigstens zwei parallelen Achsen versehen ist, auf welchen in Abständen voneinander Wälzkörper angeordnet sind, welche bei die Schliessstellungen erreichenden Platten auf Auflaufschrägen auf den sich gegenüberliegenden Plattenrückseiten auflaufen und dabei die Platten gegen die Wirkung der Zugkraft auseinander- und auf die Ventilsitze drücken.

Derartige Schiebeventile sind aus der Praxis bekannt und kommen bei den verschiedensten Geräten und Anlagen zum Einsatz. Bei all den bekannten Schiebeventilen läuft jeder der zum Auseinanderdrücken der Verschliessplatten vorgesehenen Wälzkörper gleichzeitig auf sich gegenüberliegende Auflaufschrägen an den Plattenrückseiten auf, um die Platten gleichzeitig auseinander zu keilen und auf die Sitzflächen zu drücken. Es hat sich allerdings immer wieder gezeigt, dass ein solch "starrer" Mechanismus keine Gewähr für eine ausreichende Dichtheit des Ventils bietet.

Aufgabe der vorliegenden Erfindung ist es nun, solche vom Grundkonzept her an sich richtig aufgebauten Ventile derart auszugestalten, dass in allen Betriebslagen, insbesondere auch nach Eintritt gewisser Abnützungserscheinungen, die Dichtheit des Ventils optimal gewährleistet ist.

Dies wird bei einem Schiebeventil der eingangs erwähnten Art erfindungsgemäss dadurch erreicht, dass auf jeder Achse drei Wälzkörper, denen jeweils nur eine Auflaufschräge auf jeweils einer der Plattenrückseiten zugeordnet ist, im seitlichen Abstand voneinander angeordnet sind, wobei die beiden aussenliegenden Wälzkörper der einen Achse und der in der Mitte liegende Wälzkörper der anderen Achse unter Bildung eines Dreipunktauflagers mit den Auflaufschrägen der einen Platte und die anderen Wälzkörper, ebenfalls unter Bildung eines Dreipunktauflagers, mit den Auflaufschrägen der anderen Platte zusammenwirken.

Die auf den Achsen angeordneten Wälzkörper sind vorzugsweise als Einzel- oder Doppelräder, z.B. in Form jeweils eines Kugellagerringes, ausgebildet.

Die die Wälzkörper tragenden Achsen, welche sich zwischen zwei Längsträgern des Rahmens erstrecken, können einen relativ kleinen Durchmesser aufweisen und behalten damit eine gewisse Elastizität, so dass sie sich beim Andrücken an die Platten (durch Auflaufen der Wälzkörper auf die Auflaufschrägen) gegebenenfalls leicht verbiegen können. Durch Einsatz von etwas überhöhten Auflaufschrägen wird es möglich, die Verschliessplatten in jedem Fall dicht gegen die Ventilsitze zu pressen, ohne dabei zu verklemmen oder mechanische Schäden zu verursachen.

Die Erfindung wird nachstehend anhand eines in der Zeichnung dargestellten Ausführungsbeispiels noch etwas näher erläutert. In der Zeichnung zeigt:

Fig. 1 eine Draufsicht auf ein abgedecktes Schiebeventil nach der Erfindung, welches insbesondere das verfahrbare Gestell und den Verschliessmechanismus zeigt;

Fig. 2 einen Schnitt entlang der Linie A-A eines Schiebeventils nach Fig. 1, und

Fig. 3 einen Schnitt (ausschnittweise) entlang der Linie B-B des Schiebeventils nach Fig. 1 in etwas vergrössertem Massstab.

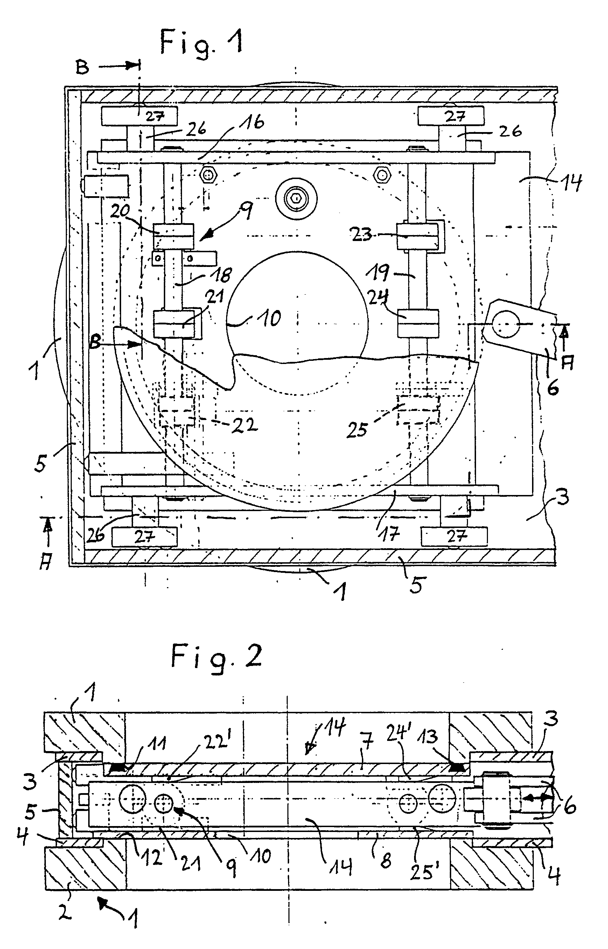

Aus den Fig. 1 und 2 der Zeichnung geht der prinzipielle Aufbau eines erfindungsgemässen Schiebeventils hervor.

In einem Ventilgehäuse 1, bestehend aus den Flanschteilen 2 und 3 und Gehäuseteilen 3,4 und 5, welch letztere gleichzeitig ein Gehäuse für einen Teil des Antriebsmechanismus (hier als Zugstange 6 schematisch dargestellt) bilden, sind zwei im Abstand voneinander parallel verlaufende Verschliessplatten 7,8 sowie zwischen diesen der eigentliche Verschliessmechanismus 9 untergebracht. Die gezeigten tellerförmigen Platten 7,8 weisen leicht verschiedene Durchmesser und verschiedene Dicken auf, wobei die hintere Platte 7 zudem eine zentrale Oeffnung 10 aufweist.

Die beiden Platten 7,8 kommen im geschlossenen Zustand auf Ventilsitze 11 bzw. 12 auf den Flanschteilen 1,2 zu liegen, wobei die eigentlich abdichtende Platte 7 noch mit einem Dichtungsring 13 versehen ist.

Die Platten 7,8 sind auf einem seitlich in das Ventilgehäuse 1 hinein verfahrbaren Gestell 14 montiert, und zwar über einen Schleppmechanismus derart mit diesem gekuppelt, dass die Platten in das Ventilgehäuse 1 hinein geschoben werden können, bis sie ihre Endstellungen vor dem eigentlichen Schliessvorgang erreichen, während das verfahrbare Gestell 14 noch um eine bestimmte Wegstrecke weitergeschoben werden kann, bis dieses an der Gehäusewand 5 zur Anlage kommt.

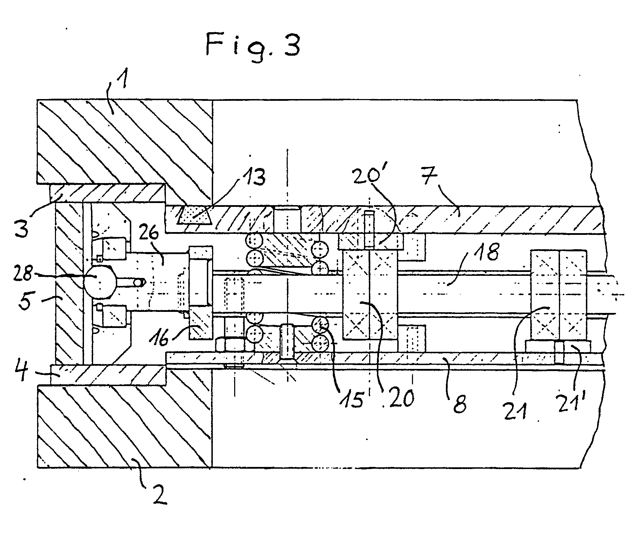

Die Platten 7,8 werden normalerweise durch Zugfedern 15 (Fig. 3) gegeneinandergezogen, so dass sie während dem Ein- und Ausfahren um einen bestimmten Betrag von den Sitzen 11,12 abgehoben sind und keine Reibung verursachen.

Der eigentliche Verschliessmechanismus besteht aus zwei in Seitenträgern 16, 17 des Gestellrahmens gehaltenen oder gegebenenfalls gelagerten Achsen 18,19, auf welchen jeweils drei Wälzkörper 20,21,22 bzw. 23,24,25 montiert sind, hier in Form von doppelten Kugellagerringen. Jedem dieser Wälzkörper 20-22 bzw. 23-25 ist jeweils eine auf den Rückseiten der Platten 7,8 (d.h. den sich zugewandten Plattenseiten) angeordnete Auflaufschräge 20'-25' zugeordnet, auf welche die Wälzkörper 20-25 bei stillstehenden Platten 7,8 jedoch weiterfahrendem Gestell 1 auflaufen und dabei die Platten 7,8 auseinander und auf die Ventilsitze 11 bzw. 12 drücken. Die Enden der Auflaufschrägen 20'-25' gehen jeweils in flache Abschnitte über, auf denen die Wälzkörper bei geschlossenen Schliessplatten 7,8 ruhen. Beim Oeffnen des Ventils läuft der Vorgang umgekehrt ab, wobei die Platten 7,8, nachdem die Wälzkörper 20-25 über die Auflaufschräge 20'-25' nach unten gelaufen sind, vom Gestell 1 mitgezogen und aus dem Ventilkörper 1 seitwärts herausgezogen werden.

Beim gezeigten Beispiel wirken die Wälzkörper 20,22 und 24, unter Bildung eines Dreipunktauflagers, mit den Auflaufschrägen 20', 22' und 24' auf der Rückseite der Platte 7 zusammen, während die Wälzkörper 21,23 und 25, ebenfalls unter Bildung eines Dreipunktauflagers, mit den Auflaufschrägen 21', 23' und 25' auf der Rückseite der Platte 8 zusammenwirken.

Durch diese Anordnung wird erreicht, dass die Platten 7,8 in optimaler Weise gegen die entsprechenden Ventilsitze 11 bzw. 12 gedrückt werden. Die Höhe der Auflaufschrägen wird leicht grösser gewählt als der theoretische Schliessweg, so dass eine vollständige Dichtheit auch bei leicht abgenutzten Platten bzw. Ventilsitzen gewährleistet ist. Da sich die Achsen 18,19 elastisch durchbiegen lassen, können die Wälzkörper entsprechend der Ueberhöhung der Auflaufschrägen jeweils ausweichen.

Fig. 3 der Zeichnung zeigt im vergrösserten Massstab einen Ausschnitt aus dem Verschliessmechanismus und illustriert zudem, wie das verfahrbare Gestell 14 im Gehäuse 1 geführt und gelagert ist. Neber vier an Bolzen 26 gelagerten Laufrollen 27, die in der Führungsnut zwischen den Gehäuseteilen 3,4 abrollen können, ist dem Bolzen 26 noch eine Kugel 28 zugeordnet, welche eine seitliche, reibungsarme Führung an den Gehäuseteilen 5 gewährleistet.

## Ansprüche

1. Schiebeventil , mit einem in einen Durchflusskanal einsetzbaren Gehäuse (1) mit Führungen zum seitlichen Einschieben von zwei im Abstand voneinander parallel verlaufenden Verschliessplatten (7,8), welche bei geöffnetem Ventil gegeneinander gezogen werden, einem zwischen den Platten (7,8) angeordneten Verschliessmechanismus (9), um jede der Platten (7,8) nach Erreichen der Schliessstellung gegen einen vorderen bzw. hinteren Ventilsitz (11;12) im Gehäuse (1) anzudrücken, welcher Mechanismus ein in den genannten Führungen verfahrbares Gestell (14) umfasst, das auch bei sich in Schliessstellung befindlichen Platten (7,8) relativ zu letzteren verschiebbar ist und in den anderen Betriebsstellungen über einen Schleppmechanismus (6) mit den Platten (7,8) bewegungsverbunden ist, wobei das Gestell (14) mit wenigstens zwei parallelen Achsen (18,19) versehen ist, auf welchen in Abständen voneinander Wälzkörper (20-25) angeordnet sind, welche bei die Schliessstellungen erreichenden Platten (7,8) auf Auflaufschrägen (20'-25') auf den sich gegenüberliegenden Plattenrückseiten auflaufen und dabei die Platten (7,8) gegen die Wirkung der Zugkraft auseinander- und auf die Ventilsitze (11,12) drücken, dadurch gekennzeichnet, dass auf jeder Achse (18,19) drei Wälzkörper (20,21 ,22;23,24,25) , denen jeweils nur eine Auflaufschräge (20'-25') auf jeweils einer der Plattenrückseiten zugeordnet ist, im seitlichen Abstand voneinander angeordnet sind, wobei die beiden aussenliegenden Wälzkörper (20,22) der einen Achse (18) und der in der Mitte liegende Wälzkörper (24) der anderen Achse (19) unter Bildung eines Dreipunktauflagers mit Auflaufschrägen (20' ,22' ,24') auf der einen Platte (7) und die anderen Wälzkörper (21,23,25), ebenfalls unter Bildung eines Dreipunktauflagers, mit Auflaufschrägen (21',23',25,) auf der anderen Platte (8) zusammenwirken.

2. Schiebeventil nach Anspruch 1, dadurch gekennzeichnet, dass jeder Wälzkörper (20-25) aus einem Einzeloder einem Doppelrad, z.B. in Form jeweils eines Kugellagerringes, gebildet ist.

3. Schiebeventil nach einem der Ansprüche 1-2, dadurch gekennzeichnet, dass die Auflaufschrägen (20'-25') an ihren Enden in einen flachen Abschnitt übergehen.

4. Schiebeventil nach einem der Ansprüche 1-3, dadurch gekennzeichnet, dass die Achsen (18,19) lediglich an ihren Enden im Gestellrahmen (16,17) gehalten sind.

5. Schiebeventil nach einem der Ansprüche 1-4, dadurch gekennzeichnet, dass der Antrieb (6) für den Schieber am verfahrbaren Gestell (14) angreift.

## Claims

1. A gate valve, comprising a housing (1) to be placed in a flow channel and having guide means for the lateral introduction of two parallely spaced closure plates (7,8) and which are pulled together when the valve is open, a closure mechanism (9) arranged between the plates (7,8) to thereby apply each plate (7,8), after having reached the closed position, against a front or rear valve seat (11; 12) in the housing (1), said mechanism comprising a frame (14) movable in said guide means, said frame being also movable with respect to said plates (7,8) when the latter are in the closed position and the frame being, in the other operating positions, coupled to the plates (7,8) by means of a tow mechanism (6), said frame (14) having furthermore mounted thereto at least two parallel shafts (18,19) on which are mounted spaced apart roll bodies (20-25) which, when the plates (7,8) reach their closed position, are sliding onto inclined slides (20'-25') provided on the opposed rear faces of said plates to thereby separate the plates (7,8) against the action of the pulling force and pressing them onto the valve seats (11,12), characterized in that three laterally spaced roll bodies (20,21,22;23,24,25) are mounted on each shaft (18,19) cooperating each with a single inclined slide (20'-25') on one of said rear faces of the plates, the two exterior roll bodies (20,22) on one of the shafts (18) and the central roll body (24) on the other shaft (19) cooperating, forming thereby a three point support, with the inclined slides (20',22',24') on one of said plates and the other roll bodies (21,23,25) cooperating, forming also a three point support, with the inclined slides (21',23',25') on the other plate (8).

2. A gate valve according to claim 1, characterized in that each roll body (20-25) is formed by a simple or a double wheel, e.g. in the form of the outer ring of a ball bearing.

3. A gate valve according to any of claims 1-2, characterized in that said inclined slides (20'-25') present at their ends a flat zone.

4. A gate valve according to any of claims 1-3, characterized in that the shafts (18,19) are held in the frame (16,17) only by their ends.

5. A gate valve according to any of claims 1-4, characterized in that the drive (6) of the gate is coupled to the movable frame (14).

## Revendications

1. Vanne à tiroir, comprenant un boîtier (1) destiné à être placé dans un canal d'écoulement et présentant des moyens de guidage pour l'introduction latérale de deux plaques de fermeture (7,8) montées parallèlement l'une de l'autre à une certaine distance et qui sont rapprochées l'une contre l'autre lorsque la vanne est ouverte; un mécanisme de fermeture (9) disposé entre les plaques (7,8), pour appuyer chaque plaque (7,8), après avoir atteint la position de fermeture, contre un siège de vanne (11;12) avant ou arrière respectivement dans le boîtier (1), ledit mécanisme comprenant un chassis (14) déplaçable dans lesdits moyens de guidage, ce chassis étant également déplaçable par rapport aux plaques (7,8) lorsque ces dernières se trouvent en position de fermeture et le chassis étant, dans les autres positions de travail, accouplé aux plaques (7,8) par l'intermédiaire d'un mécanisme d'entraînement (6), ledit chassis (14) étant muni d'au moins deux arbres parallèles (18,19) sur lesquels sont montés à certaines distances des corps roulants (20-25) qui, lorsque les plaques (7,8) arrivent dans leurs position de fermeture, montent sur des glissières inclinées (20'-25') prévues sur les faces arrières opposées desdites plaques pour ainsi séparer les plaques (7,8) contre l'action de la force de traction et les presser sur les sièges de vanne (11,12), caractérisée en ce que sur chaque arbre (18,19) sont montés trois corps roulants (20,21,22;23,24,25) espacés latéralement et coopérant chacun avec une seule glissière inclinée (20'-25') sur une des faces arrières des plaques, les deux corps roulants extérieurs (20,22) de l'un des arbres (18) et le corps roulant central (24) de l'autre arbre (19) coopérant, en formant un appui à trois points, avec des glissières inclinées (20',22',24') sur l'une des plaques et les autres corps roulants (21,23,25) coopérant, en formant également un appui à trois points, avec des glissières inclinées (21',23',25') sur l'autre plaque (8).

2. Vanne à tiroir selon la revendication 1, caractérisée en ce que chaque corps roulant (20-25)

est constitué d'une roue simple ou d'une roue double, par exemple sous forme d'une bague extérieure d'un roulement à billes.

3. Vanne à tiroir selon l'une des revendications 1-2, caractérisée en ce que les glissières inclinées (20'-25') présentant à leurs extrémités une zone plate.

4. Vanne à tiroir selon l'une des revendications 1-3, caractérisée en ce que les arbres (18,19) sont retenus dans le chassis (16,17) uniquement à leurs extrémités.

5. Vanne à tiroir selon l'une des revendications 1-4, caractérisée en ce que l'entraînement pour le tiroir attaque au chassis mobile (14).

## Fig. 1

## Fig. 2

# Fig. 3